# EUROPEAN PATENT APPLICATION

(11) **EP 1 670 114 A2**
(43) Date of publication of application: **14.06.2006**
(21) Application number: 05257542.0
(22) Date of filing: 08.12.2005
(51) Int. Cl.: H02J 7/00

(54) **Battery charger**

(30) Priority: 08.12.2004 JP 2004356050
(71) Applicant: HITACHI KOKI CO., LTD., Tokyo 108-6020 (JP)
(72) Inventor: Aradachi, Takao, c/o Hitachi Koki Co., Ltd., Hitachinaka-shi, Ibaraki-ken 312-8502 (JP); Takano, Nobuhiro, c/o Hitachi Koki Co., Ltd., Hitachinaka-shi, Ibaraki-ken 312-8502 (JP); Funabashi, Kazuhiko, c/o Hitachi Koki Co., Ltd., Hitachinaka-shi, Ibaraki-ken 312-8502 (JP)
(74) Representative: Wightman, David Alexander

(57) **Abstract**

A battery charger detects a battery voltage, a battery temperature, and computes a change in the battery voltage between two timings at which the battery voltages are detected and also a change in the battery temperature between two timings at which the battery temperatures are detected. A charge current is determined based on the battery voltage gradient information, the battery temperature gradient information, and at least one of the battery voltage information and the battery temperature information. Also, a full charge discrimination value is also determined based on at least three parameters mentioned above. The battery is determined to be a full charge condition when the computed battery temperature change has exceeded a sum of the minimum battery temperature gradient value and the full charge discrimination value.

## Description

The present invention relates to a battery charger for charging secondary batteries, such as nickel-cadmium batteries and nickel-metal hydride batteries.

There is a demand for high power output power tools that use a secondary battery as a power source. Conventionally, nickel-cadmium batteries (hereinafter referred to as "NiCd batteries") have been extensively used in such power tools because of a large current output capability and short time rechargeability. The power tools using NiCd batteries enhance work efficiency.

Recently, there is a demand for further enhancing the work efficiency of the power tools by the use of batteries that have higher capacity than NiCd batteries. Also, a new type of battery that does not use cadmium is required for the environment protecting reason. Nickel-metal hydride batteries (hereinafter referred to as "NiMH batteries") generally comply with the above demands and tend to be used in place of NiCd batteries.

NiCd batteries and NiMH batteries can be compatibly used because rated voltage of both NiCd battery cell and NiMH battery cell is 1.2V. However, different charging methods have to be used in charging NiCd batteries and NiMH batteries due to different reactions occurring in active substances contained in the batteries when the batteries are charged or discharged with the same level current.

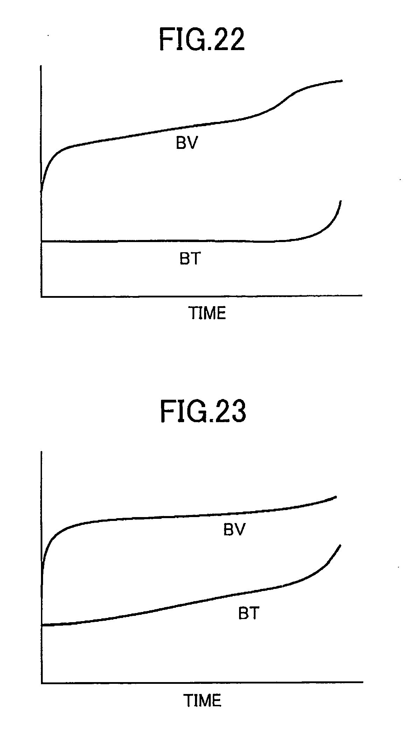

Typical battery voltage and battery temperature characteristics of NiCd battery and NiMH battery are shown in Figs. 22 and 23, respectively. As shown, NiCd battery and NiMH battery exhibit different rate of change in battery temperature and battery voltage, so that these different types of batteries require different charging methods.

In order to charge both the NiCd batteries and NiMH batteries with a single battery charger, Japanese Patent Application Publication No. HEI-11-150879 discloses providing a discrimination terminal to each of NiCd battery and NiMH battery, and a battery type detector to the battery charger. With this battery charger, when the battery to be charged, which may either be a NiCd battery or a NiMH battery, is loaded in the battery charger for charging, the discrimination terminal is brought into contact with the battery type detector. Thus, the type of the battery subject to be charged can be identified by the output from the battery type detector and a proper charge control is carried out so as to be adapted to the battery thus identified.

However, when the charge control is implemented with a computer program, different types of computer programs are required for different types of batteries, so that a ROM with a large storage capacity is needed. The use of a microcomputer provided with a ROM of a large storage capacity is disadvantageous in terms of cost.

Generally, the same type batteries have slightly different capacities and internal resistances, therefore the charge control most suitable for the battery cannot be determined solely by the type of the battery.

In view of the foregoing, it is an object of the invention to provide a battery charger that can brings out the best performance of a battery subject to charge by determining an individual charge current and an individual condition to determine that the battery has fully charged while referring to a battery temperature, a battery temperature gradient, a battery voltage, a battery voltage gradient, or the like.

To achieve the above and other objects, the battery charger in accordance with the invention includes: a battery voltage detecting section that detects a battery voltage and produces battery voltage information about the detected battery voltage; a battery voltage gradient computing section that computes a change in the battery voltage between two timings at which the battery voltages are detected, the battery voltage computing section producing battery voltage gradient information about the computed change in the battery voltage; a battery temperature detecting section that detects a battery temperature and produces battery temperature information about the detected battery temperature; a battery temperature gradient computing section that computes a change in the battery temperature between two timings at which the battery temperatures are detected, the battery temperature gradient computing section producing battery temperature gradient information about the computed change in the battery temperature; and a control section that controls a charge current supplied to a battery based on the battery voltage gradient information, the battery temperature gradient information, and at least one of the battery voltage information and the battery temperature information.

According to another aspect of the invention, the battery charger further includes a storage section that stores a minimum battery temperature gradient value indicative of a minimum change in the battery temperature between two timings at which the battery temperatures are detected. The control section further determines a full charge discrimination value based on the battery voltage gradient information, the charge current, and at least one of the battery voltage information and the battery temperature information, and determines that the battery has reached a full charge condition when the computed battery temperature change has exceeded a sum of the minimum battery temperature gradient value and the full charge discrimination value.

For example, the battery voltage gradient information indicates whether the computed battery voltage change is high or low. The computed battery voltage change is determined to high when comparison of the computed battery voltage change with a reference battery voltage change indicates that the computed battery voltage change is higher than the reference battery voltage change whereas the computed battery voltage change is determined to low when comparison of the computed battery voltage change with the reference battery temperature change indicates that the computed battery voltage change is lower than the reference battery voltage change.

The above and other objects, features and advantages of the invention will become more apparent from reading the following description of the preferred embodiment taken in connection with the accompanying drawings in which:
Fig. 1 is a block diagram showing a battery charger according to a preferred embodiment of the present invention;
Fig. 2 is a flowchart illustrating operations of the battery charger shown in Fig. 1;
Fig. 3 is a table showing charge currents under various parametric conditions;
Fig. 4 is a table showing critical values used for detecting a fully charged condition of a battery under various parametric conditions;
Fig. 5 is a table showing types of battery packs and their characteristics;
Fig. 6 is a graphical representation showing battery voltage and battery temperature characteristic curves of a battery pack <1>;
Fig. 7 is a graphical representation showing battery voltage and battery temperature characteristic curves of a battery pack <2>;
Fig. 8 is a graphical representation showing battery voltage and battery temperature characteristic curves of a battery pack <3>;
Fig. 9 is a graphical representation showing battery voltage and battery temperature characteristic curves of a battery pack <4>;
Fig. 10 is a graphical representation showing battery voltage and battery temperature characteristic curves of a battery pack <5>;
Fig. 11 is a graphical representation showing battery voltage and battery temperature characteristic curves of a battery pack <6>;
Fig. 12 is a graphical representation showing battery voltage and battery temperature characteristic curves of a battery pack <7>;
Fig. 13 is a graphical representation showing battery voltage and battery temperature characteristic curves of a battery pack <8>;
Fig. 14 is a graphical representation showing battery voltage and battery temperature characteristic curves of a battery pack <9>;
Fig. 15 is a graphical representation showing battery voltage and battery temperature characteristic curves of a battery pack <10>;
Fig. 16 is a graphical representation showing battery voltage and battery temperature characteristic curves of a battery pack <11>;
Fig. 17 is a graphical representation showing battery voltage and battery temperature characteristic curves of a battery pack <12>;
Fig. 18 is a graphical representation showing battery voltage and battery temperature characteristic curves of a battery pack <13>;
Fig. 19 is a graphical representation showing battery voltage and battery temperature characteristic curves of a battery pack <14>;
Fig. 20 is a graphical representation showing battery voltage and battery temperature characteristic curves of a battery pack <15>;
Fig. 21 is a graphical representation showing battery voltage and battery temperature characteristic curves of a battery pack <16>;
Fig. 22 is a graphical representation showing battery voltage and battery temperature characteristic curves of a NiCd battery; and
Fig. 23 is a graphical representation showing battery voltage and battery temperature characteristic curves of a NiMH battery.

A battery charger according to a preferred embodiment of the present invention will be described while referring to the accompanying drawings.

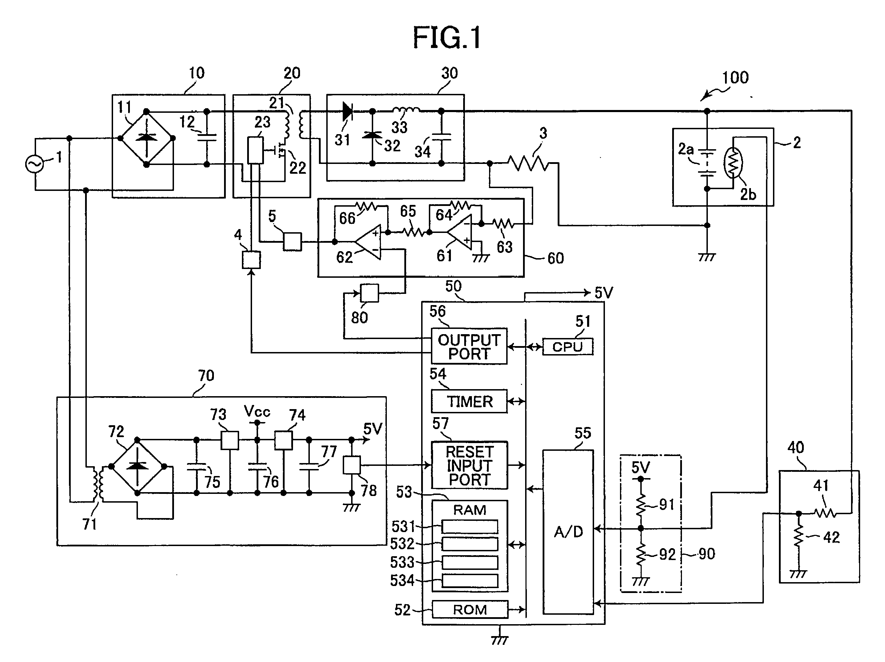

Fig. 1 shows a block diagram showing the configuration of the battery charger 100 according to the embodiment of the invention. The battery charger 100 includes a switching power source made up of a first rectifying/smoothing circuit 10, a switching circuit 20, and a second rectifying/smoothing circuit 30. A battery pack 2 is connected to the output of the switching power source. The battery pack 2 has a negative terminal to which a resistor 3 serving as a charge current detector is connected. The charge current detected by the resistor 3 is fed back to the switching circuit 20 via a charge current control circuit 60 and a photo-coupler 5.

A battery voltage detecting circuit 40 and a battery temperature detecting circuit 90 are connected to the battery pack 2. The outputs from these circuits 40 and 90 are supplied to a microcomputer 50. The microcomputer 50 is connected to the charge current control circuit 60 via a charge current setting circuit 80 and also to the switching circuit 20 via a photo-coupler 4. The battery charger 100 further includes a constant voltage power source 70 for supplying a constant DC voltage (5V in this embodiment) to the various sections of the battery charger 100 including the battery temperature detecting circuit 90.

Configurations of the battery pack 2 and the battery charger 100 will be described in detail.

The battery pack 2 includes a plurality of cells 2a connected in series, and a thermistor 2b disposed in contact or in proximity with the cells 2a for sensing the temperature of the cells 2a. The thermistor 2b has one terminal connected to a reference potential point and another terminal to the microcomputer 50 via the battery temperature detecting circuit 90.

The battery pack 2 is supplied with a charge current from the switching power source. The first rectifying/smoothing circuit 10 configuring the switching power source includes a full-wave rectifier 11 and a smoothing capacitor 12. The switching circuit 20 includes a high frequency transformer 21, a MOSFET 22, and a PWM (pulse width modulation) control IC 23. This IC 23 changes the width of driving pulses applied to the MOSFET 22 and adjusts the output voltage from the second rectifying/smoothing circuit 30. The MOSFET 22 is rendered ON and OFF in response to the signal fed from the PWM control IC 23, whereby the DC voltage output from the first rectifying/smoothing circuit 10 is changed to an AC waveform and the resultant AC voltage is applied to a high-frequency transformer 21. The second rectifying/smoothing circuit 30 configuring the switching power source includes diodes 31, 32, a choke coil 33, and a smoothing capacitor 34. The AC voltage output from the high-frequency transformer 21 is rectified by the diodes 31, 32 and smoothed by the smoothing capacitor 34.

The resistor 3 is a current detecting element that detects the charge current flowing in the battery pack 2. The charge current detected by the resistor 3 is applied to the charge current control circuit 60. The charge current control circuit 60 is connected between the resistor 3 and the switching circuit 20 to maintain the charge current at a predetermined level. The charge current control circuit 60 includes a first stage operational amplifier 61 and its associated input resistor 63 and feedback resistor 64, and a second stage operational amplifier 62 and its associated input resistor 65 and a feedback resistor 66. The charge current detected by the resistor 3 is applied to the inverting input terminal of the first stage operational amplifier 61 via the input resistor 63. The output of a charge current setting circuit 80 is applied to the inverting input terminal of the second stage operational amplifier 62. With such a configuration, the charge current control circuit 60 compares the charge current detected by the resistor 3 with a reference charge current set by the charge current setting circuit 80 and outputs a comparison result.

The photo-coupler 5 is connected between the output of the charge current control circuit 60 and the PWM control IC 23 for feeding back a charge current signal produced at the secondary side of the high-frequency transformer 21 to the primary side of the high-frequency transformer 21.

The battery voltage detecting circuit 40 is made up of two resistors 41, 42 connected in series and is connected between the positive terminal of the battery pack 2 and the referenced potential point or ground. The resistors 41, 42 divide the voltage across the battery pack 2 according to a ratio of resistances of the resistors 41, 42, and the resultant divided voltage is applied to the microcomputer 50.

The battery temperature detecting circuit 90 is made up of two resistors 91, 92 connected in series and is connected between the constant DC voltage line (5V) and the reference potential point. The junction between the resistors 91, 92 is connected to the thermistor 2b. Because the thermistor 2b and the resistor 92 are connected in parallel, the voltage indicative of the temperature of the battery cells 2a is applied to the microcomputer 50.

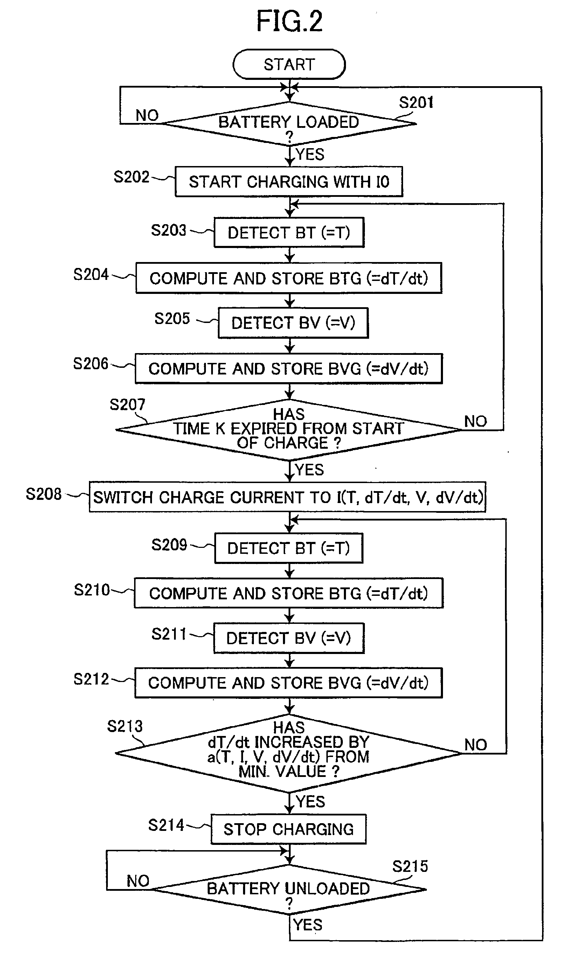

The microcomputer 50 includes a CPU 51, a ROM 52, a RAM 53, a timer 54, an A/D converter 55, an output port 56, and a reset input port 57 which are mutually connected by a bus. The ROM 52 stores various programs including a program corresponding to the flowchart shown in Fig. 2. The CPU 51 executes a series of processes in accordance with the program being run. The RAM 53 has storage areas including a battery voltage storage area 531 for storing battery voltages (hereinafter referred to as "BVs") detected by the battery voltage detecting circuit 40, a battery temperature storage area 532 for storing battery temperatures (hereinafter referred to as "BTs") detected by the battery temperature detecting circuit 90, a battery voltage gradient storage area 533 for storing battery voltage gradients (hereinafter referred to as "BVGs") obtained by computation of the detected battery voltages, and a battery temperature gradient storage area 534 for storing battery temperature gradients (hereinafter referred to as "BTGs") obtained by computation of the detected battery temperatures.

The A/D converter 55 converts analog voltages output from the battery voltage detecting circuit 40 and the battery temperature detecting circuit 90 to digital signals. The reset input port 57 is connected to the reset IC 78 of the constant voltage power source 70. The microcomputer 50 is reset when applied with a reset input signal from the reset IC 78.

The output port 56 is connected to both the charge current setting circuit 80 and the photo-coupler 4. The charge current setting circuit 80 changes the voltage applied to the inverting input terminal of the second stage operational amplifier 62 in response to the signal fed from the output port 56. The voltage applied to the inverting input terminal of the second stage operational amplifier 62 corresponds to the set charge current to be flowed in the battery pack 2. The charge current control circuit 60 feeds back a difference between the target charge current and the actual charge current detected by the resistor 3 to the PWM control IC 23 via the photo-coupler 5.
The photo-coupler 4 transmits charge start and stop command signals issued from the output port 56 of the microcomputer 50 to the PMW control IC 23 of the switching circuit 20.

The CPU 50 receives BVs detected by the battery voltage detecting circuit 40 and BTs detected by the battery temperature detecting circuit 90 at every sampling time. The detected BVs and BTs are stored in the battery voltage storage area 531 and the battery temperature storage area 532 of the RAM 53, respectively. All the BVs and BTs ever detected by the battery voltage detecting circuit 40 and the battery temperature detecting circuit 90 are not stored in the battery voltage storage area 531 and the battery temperature storage area 532 respectively but only the predetermined number of most recently detected BVs and BTs are stored therein. Whenever a battery voltage (hereinafter referred to as "BV") and a battery temperature (hereinafter referred to as "BT") are newly detected, the oldest BV and BT are expelled from the battery voltage storage area 531 and the battery temperature storage area 532 and the newly detected BV and BT are stored, thereby holding a predetermined number of most recently detected BVs and BTs in the corresponding storage areas.

The CPU 50 computes dV/dt to obtain BVGs based on the oldest BV and the newly detected BV and stores the resultant value in the battery voltage gradient storage area 533 of the RAM 53. The battery voltage gradient (hereinafter referred to as "BVG") is a difference value obtained by subtracting the oldest BV stored in the battery voltage storage area 531 from the presently detected BV. Similarly, the CPU 50 computes dT/dt to obtain BTGs based on the oldest BT and the newly detected BT and stores the resultant value in the battery temperature gradient storage area 534 of the RAM 53. The battery temperature gradient (hereinafter referred to as "BTG") is a difference value obtained by subtracting the oldest BT stored in the battery temperature storage area 531 from the presently detected BT. The RAM 53 has a storage area for storing the minimum BTG. When the presently computed BTG is smaller than the recorded minimum BTG, the storage area updates the minimum BTG.

The constant voltage power source 70 includes a transformer 71, a full-wave rectifier 72, a smoothing capacitors 75-77, three-terminal voltage regulators 73, 74, and a reset IC 78. The reset IC 78 issues the reset signal to the reset input port 57 of the microcomputer 50 to reset the same. The charge current setting circuit 80 is connected between the output port 56 of the microcomputer 50 and the inverting input terminal of the second stage operational amplifier 62. The charge current setting circuit 80 is provided for setting a target charge current by changing the value of voltage applied to the inverting input terminal of the second stage operational amplifier 62 in response to the signal output from the microcomputer 50.

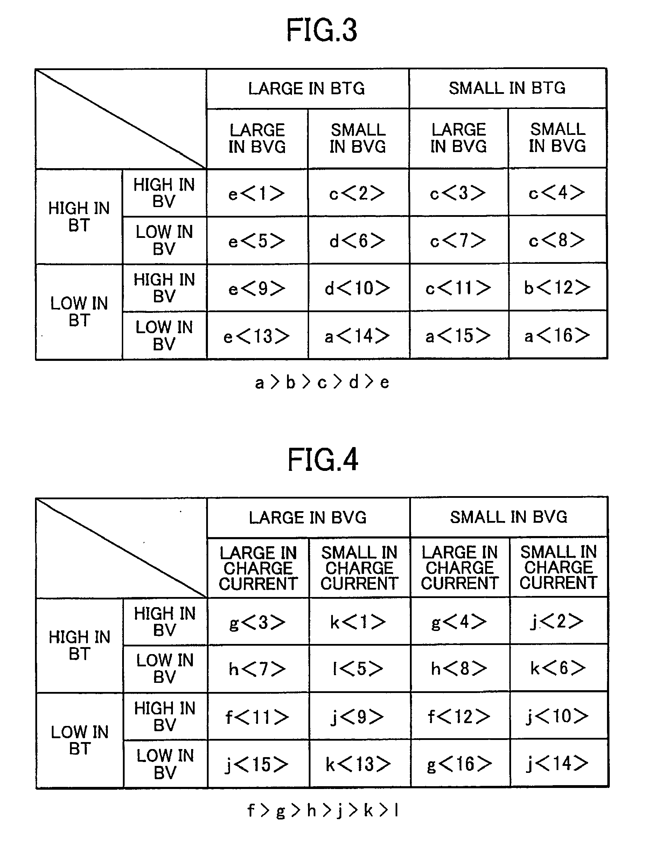

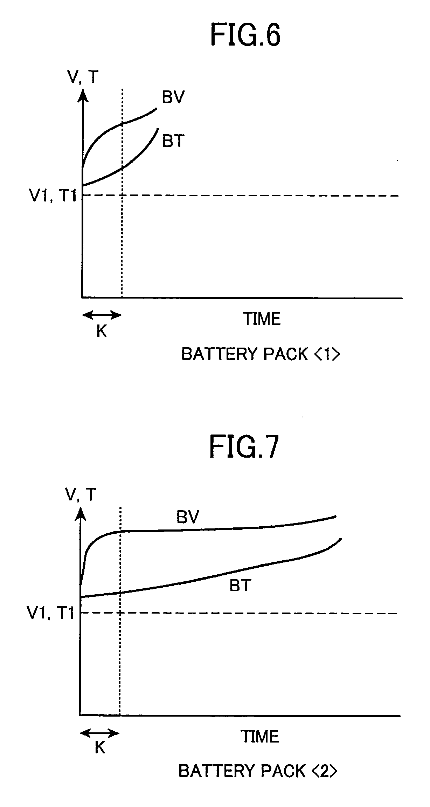

Next, a control method of the battery charger 100 will be described while referring to the block diagram shown in Fig. 1, a flowchart shown in Fig. 2, Tables shown in Figs. 3 through 5, and characteristic curves shown in Figs. 6 through 23. Hereinafter individual steps will be referred to with an "S" followed by the step number.

To charge the battery cells 2a contained in the battery pack 2 with the battery charger 100, the battery pack 2 has to be loaded in the battery charger 100 and the battery charger 100 has to be connected to a commercial AC power supply 1. When the battery charger 100 is powered, the microcomputer 50 initializes its output port 56 and then goes into a standby condition in which it is determined that the battery pack 2 is loaded in the battery charger 100 (S201). When, by referring to the signal output from the battery voltage detecting circuit 40, the microcomputer 50 determines that the battery pack 2 is loaded (S201: YES), the microcomputer 50 starts charging the battery with a charge current 10 (S202). Simultaneously with the start of charging, the timer 54 of the microcomputer 50 starts measuring a sampling time.

The battery temperature detecting circuit 90 detects BT (=T) (S203). The microcomputer 50 computes BTG (=dT/dt) based on the detected BT and stores the resultant value in the relevant storage location 532 of the RAM 53 (S204). Subsequently, the battery voltage detecting circuit 40 detects BV (=V) (S205). The microcomputer 50 computes BVG (=dV/dt) based on the detected BV and stores the resultant value in the relevant storage location 531 of the RAM 53 (S206).

Next, while referring to the timer 54, determination is made as to whether or not a predetermined period of time ***K*** has expired from the start of charge (S207). The predetermined period of time K is a minimum time to be posed to start computing BVG and BTG using detected BV and BT. After expiration of the time ***K,*** charging the battery is continued with a preset charge current. It is desirable that the predetermined period of time ***K*** be set to, for example, 2 to 3 minutes.

When the predetermined period of time ***K*** has not yet expired (S207: NO), the routine returns to S202 whereas when the predetermined period of time ***K*** has expired (S207:YES), the charge current is set to I(T, dT/dt, V, dV/dt) as shown in the Table of Fig. 3 that is determined based on detected BT, BTG, BV (=V) and BVG (=dV/dt) (S208).

More specifically, when BT is small, BV is low, and BVG is small, the battery is charged with the largest level current ***a*** among the preselected set values. Conversely, when BT is high, BTG is large, BV is high and BVG is large, the battery is charged with the smallest level current ***e*** among the preselected set values. It should be noted that in the Table shown in Fig. 3, the preselected set currents ***a, b, c, d*** and ***e*** has a relationship of ***a>b>c>d>e*.** It should also be noted that the terms "large", "small", "high" and "low" used to refer to the levels of BT, BTG, BV and BVG are the results of comparison with respective reference values. These reference values and the relationship between BT, BTG, BV and BVG as shown in the Table of Fig. 3 are stored in the ROM 52. The microcomputer 50 compares the detected or computed BT, BTG, BV and BVG with the respective reference values and selects a pertinent charge current. The microcomputer 50 applies a signal corresponding to the selected charge current to the charge current control circuit 60 via the output port 56 and the charge current setting circuit 80, thereby controlling the charge current.

Detecting, computing and storing processes similar to those in S202 through S206 are executed in S209 through S212 to select a pertinent full charge discrimination value for determination of a fully charged condition of the battery using the parameter of BTG (S213). The battery is determined to be fully charged when the computed BTG exceeds the level that is above the full charge discrimination value ***a***(T, I, V, dV/dt) from the registered minimum BTG. The full charge discrimination value is determined based on BT, charge current (=I), BV, and BVG. The full charge discrimination values are, for example, set to the values as indicated in the Table shown in Fig. 4.

More specifically, when the charge current is large, BVG is small, BT is low, and BV is large, the maximum value ***f*** is selected from the predetermined full charge discrimination values. When the charge current is small, BVG is large, BT is high, and BV is small, the minimum value ***1*** is selected from the predetermined full charge discrimination values. In the former case, the battery is determined to be fully charged when the BTG computed at every sampling time exceeds the level that is above a full charge discrimination value ***f*** from the registered minimum BTG. In the latter case, the battery is determined to be fully charged when BTG exceeds the level that is above a full charge discrimination value ***1*** from the registered minimum BTG. In the Table shown in Fig. 4, a set of the full charge discrimination values has a relationship of ***f>g>h>j>k>l*.** Details of the Tables shown in Figs. 3 and 4 will be described later.

Using a relevant full charge discrimination value, the battery is determined to be fully charged (S214). When the battery pack 2 is unloaded from the battery charger 100 (S215), the routine returns to S201.

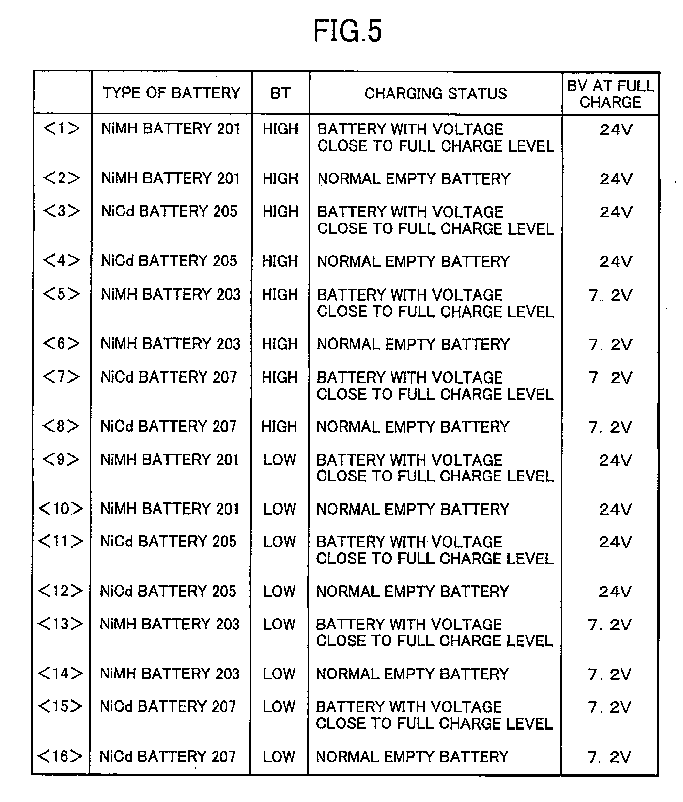

Next, the Tables shown in Figs. 3 and 4 will be described with reference to the Table shown in Fig. 5 and the characteristic curves shown in Figs. 6 through 23. The Tables and the characteristic curves deal with four types of battery packs classified into NiCd and NiMH battery packs each having a full charge voltage of 24V and 7.2V. Specifically, the four types of battery packs include a 24V NiMH battery pack 201, a 7.2V NiMH battery pack 203, a 24V NiCd battery pack 205, and a 7.2V NiCd battery pack 207.

When each of the four types of batteries 201, 203, 205 and 207 is further classified into two categories in terms of temperature of the battery, one being a low temperature battery such as the one that has been left unused for a long period of time after being discharged, and the other being a high temperature battery such as the one that has just been discharged. Each of high and low temperature batteries is further classified into two categories in terms of charges remaining in the battery, one being a battery remaining charges with a level close to the full charge condition, and the other being an empty battery. As a result of the above-described classifications, sixteen battery packs (hereinafter referred to as battery packs <1> through <16>) can be subject to consideration as having different behaviors. Figs. 6 through 21 show BV and BT characteristic curves of the battery packs <1> through <16>, respectively, in which V1 is a BV reference value for determining whether detected BV is large or small and T1 is a BT reference value for determining whether detected BT is high or low. It should be noted that although in Figs. 6 through 21, V1 and T1 are shown to be on the same level, actual values of V1 and T1 differ in each of the battery packs <1> through <16>.

Fig. 6 shows BV and BT characteristic curves of battery pack <1>. The battery pack <1> is a 24V NiMH battery pack, and is such a battery that has just been discharged and has remaining charges with a near full charge level. With the battery pack <1>, BV is above V1 (i.e., BV is high) and BT is above temperature T1 (i.e., BT is high) at a time instant when a period of time ***K*** has expired from the start of charge (hereinafter this time instant will be referred to as "time instant ***K***").

Because battery pack <1> has remaining charges with the near full charge level, the BV and BT characteristic curves of battery pack <1> will change similar to those shown in Fig. 23 in a portion approaching to the full charge level (the portion will hereinafter referred to as "near full charge zone"). As can be appreciated from Fig. 23, BVG and BTG of a NiMH battery increase in the near full charge zone. Accordingly, BVG and BTG reference values, that are used to determine whether BVG and BTG computed at the time instant ***K*** are large or low, are set to levels lower than BVG and BTG of battery pack <1> that is at the near full charge level. Then, BVG and BTG of battery pack <1> is determined to high when compared with BVG and BTG reference values. As described, battery pack <1> is determined at the time instant K that BV and BT are high and BVG and BTG are large, so that battery pack <1> is categorized into a region <1> in the Table of Fig. 3 and the charge current is set to a level ***e***.

Fig. 7 shows BV and BT characteristic curves of battery pack <2>. The battery pack <2> is a 24V NiMH battery pack, and is such a battery that has just been discharged to an empty level. As such, battery pack <2> exhibits BV and BT characteristic curves similar to those shown in Fig. 23 and is high in temperature. Accordingly, at the time instant ***K,*** the battery pack <2> is determined so that BV is above V1 (i.e., BV is high) and BT is above temperature T1 (i.e., BT is high).

As can be appreciated from Figs. 22 and 23, NiMH batteries are higher in BTG than NiCd batteries except the near full charge zone. The BTG reference value is thus set to a value higher than the highest BTG value of NiCd batteries but lower than the lowest BTG value of NiMH batteries. With the BTG reference value thus set, BTG of battery pack <2> is determined to large when compared with the BTG reference value.

As can also be appreciated from Fig. 23, BVG computed at the time instant ***K*** is smaller than BVG at the near full charge zone. The BVG reference value is thus set to a value lower than BVG at some point on the near full charge zone. With the BVG reference value thus set, BVG of battery pack <2> is determined to small when compared with the BVG reference value.

As described, battery pack <2> is determined at the time instant ***K*** that BV and BT are high, BTG is large and BVG is small, so that battery pack <2> is categorized into a region <2> in the Table of Fig. 3 and the charge current is set to a level **c**.

As described above, NiMH batteries are determined so that the computed BTG at the time instant ***K*** is large whereas NiCd batteries are determined so that the computed BTG at the time instant ***K*** is small. Batteries with near full charge level are determined to have a large BVG at the time instant ***K*** regardless of whether the battery is of NiCd or NiMH. Empty batteries are small in BVG at the time instant ***K*** as compared with BVG at some point on the near full charge zone regardless of whether the battery is of NiCd or NiMH. Therefore, the BVG reference value is set to such a level that the BVG of the empty battery computed at the time instant ***K*** is smaller than the BVG reference value regardless of whether the battery is of NiCd or NiMH.

The BV reference value is determined based on BV at the time of full charge. Batteries that have just been discharged are generally high in BT regardless of whether the battery is of NiCd or NiMH. Therefore, such batteries are determined to high in BT detected at the time instant ***K*.** On the other hand, batteries that have left unused for a long period of time are generally low in BT. Therefore, such batteries are determined to low in BT detected at the time instant ***K***.

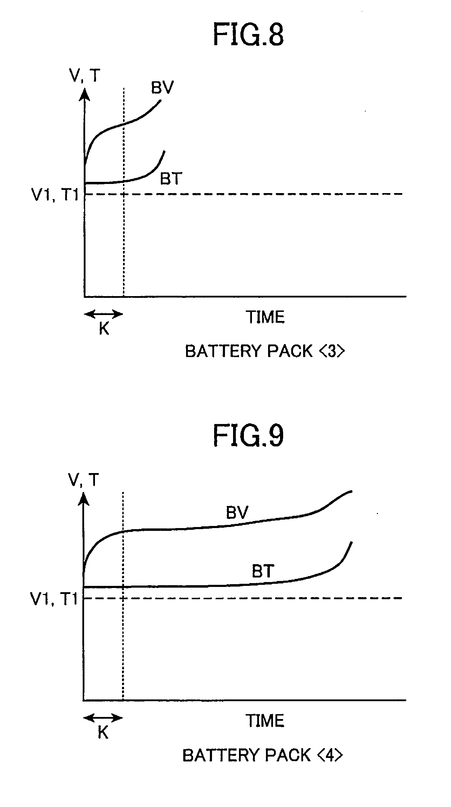

The battery packs <3> through <16> that exhibit BV and BT characteristic curves as shown in Figs. 8 through 20 are categorized into relevant regions in the Table of Fig. 3 and the charge current is set to a level indicated in the Table region.

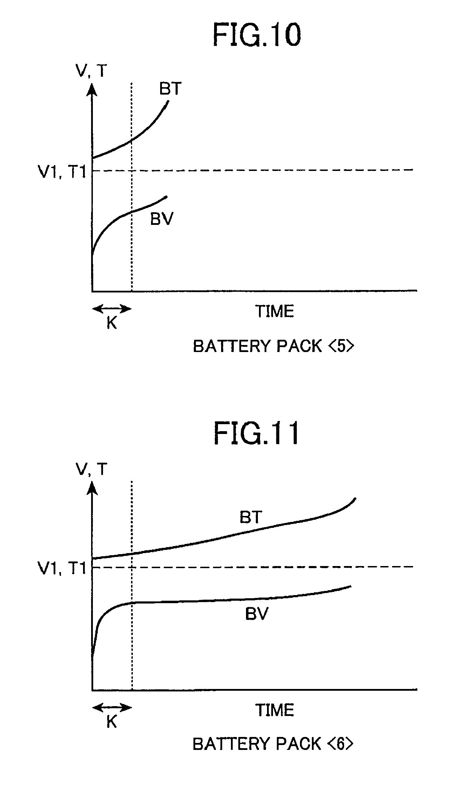

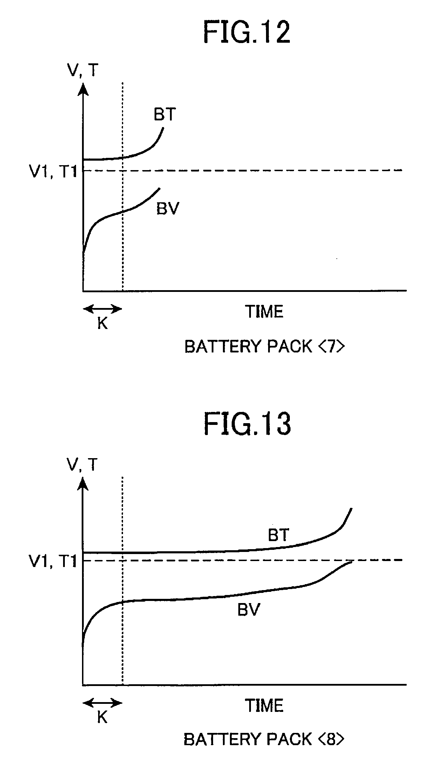

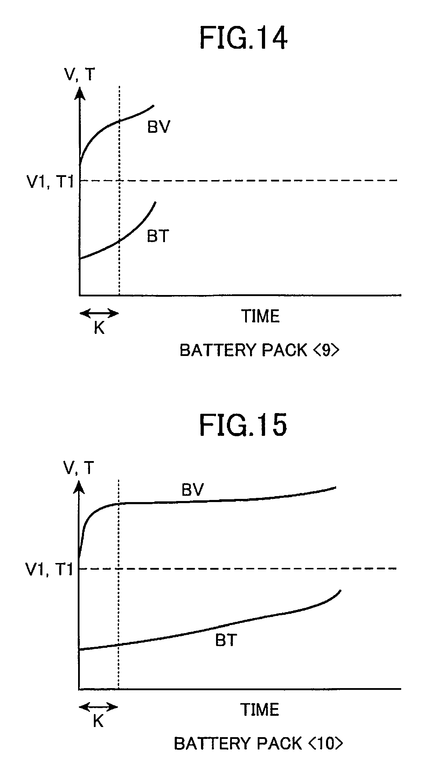

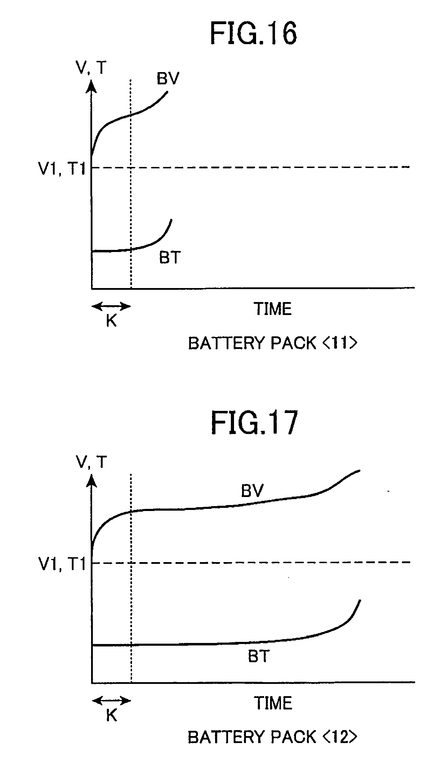

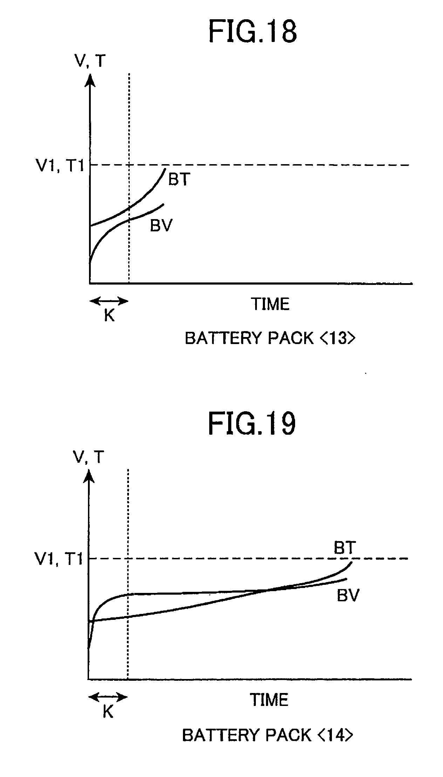

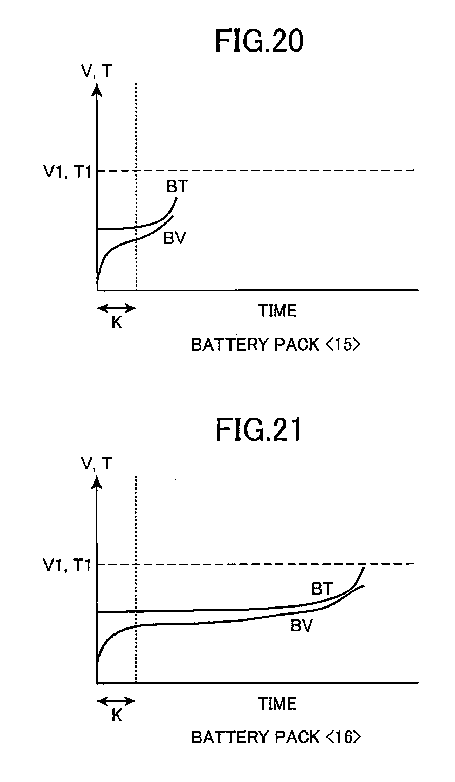

Battery pack <3> having BV and BT characteristic curves as shown in Fig. 8 is determined so that BV and BT are high, BVG is large, and BTG is small. The charge current for battery pack <3> is set to a level ***c***. Battery pack <4> having BV and BT characteristic curves as shown in Fig. 9 is determined so that BV and BT are high, and BVG and BTG are small. The charge current for battery pack <4> is set to the level c.. Battery pack <5> having BV and BT characteristic curves as shown in Fig. 10 is determined so that BV is low, BT is high, and BVG and BTG are large. The charge current for battery pack <5> is set to a level ***e***. Battery pack <6> having BV and BT characteristic curves as shown in Fig. 11 is determined so that BV is low, BT is high, BVG is small, and BTG is large. The charge current for battery pack <6> is set to a level ***d.*** Battery pack <7> having BV and BT characteristic curves as shown in Fig. 12 is determined so that BV is low, BT is high, BVG is large, and BTG is small. The charge current for battery pack <7> is set to the level ***c***. Battery pack <8> having BV and BT characteristic curves as shown in Fig. 13 is determined so that. BV is low, BT is high, and BVG and BTG are small. The charge current for battery pack <8> is set to the level ***c***. Battery pack <9> having BV and BT characteristic curves as shown in Fig. 14 is determined so that BV is high, BT is low, BVG and BTG are large. The charge current for battery pack <9> is set to the level ***e***. Battery pack <10> having BV and BT characteristic curves as shown in Fig. 15 is determined so that BV is high, BT is low, BVG is small, and BTG is large. The charge current for battery pack <10> is set to a level ***d***. Battery pack <11> having BV and BT characteristic curves as shown in Fig. 16 is determined so that BV is high, BT is low, BVG is large, and BTG is small. The charge current for battery pack <11> is set to the level ***c***. Battery pack <12> having BV and BT characteristic curves as shown in Fig. 17 is determined so that BV is high, BT is low, and BVG and BTG are small. The charge current for battery pack <12> is set to the level ***b***. Battery pack <13> having BV and BT characteristic curves as shown in Fig. 18 is determined so that BV and BT are low and BVG and BTG are large. The charge current for battery pack <13> is set to the level e. Battery pack <14> having BV and BT characteristic curves as shown in Fig. 19 is determined so that BV and BT are low, BVG is small, and BTG is large. The charge current for battery pack <14> is set to the level ***a*.** Battery pack <15> having BV and BT characteristic curves as shown in Fig. 20 is determined so that BV and BT are low, BVG is large, and BTG is small. The charge current for battery pack <15> is set to the level ***a*** Battery pack <16> having BV and BT characteristic curves as shown in Fig. 21 is determined so that BV and BT are low, and BVG and BTG are large. The charge current for battery pack <16> is set to the level ***a***. Examples of the charge currents are: ***a***=9(A), ***b***=7.5(A), ***c***=6(A), ***d***=5(A), and ***e***=4(A).

Next, description will be made with respect to full charge determination BTG values used for determining that the battery pack has reached a full charge condition while referring to the Table shown in Fig. 4.

With respect to battery pack <1> (see Fig. 6), BV is determined to high and BT is determined to high because battery pack <1> is the 24V NiMH battery pack 201 and is the one that has just been discharged. Further, because battery pack <1> is in a near full charge condition, BVG is determined to large. From the region <1> in the Table shown in Fig. 3, the charge current is set to the level ***e.*** By setting the charge current reference value, that is used for determining whether the charge current is large or small, to a level higher than the level of charge current ***c,*** the charge current for battery pack <1> is determined to small. Accordingly, battery pack <1> is classified into region <1> in the Table of Fig. 4 and temperature ***k*** °C is used for determining the full charge condition. Specifically, battery pack <1> is determined to be fully charged when the computed BTG exceeds the level that is above ***k*** °C from the minimum BTG registered after the time instant ***K.***

With respect to battery pack <2> (see Fig. 7), BV is determined to high and BT is determined to high because battery pack <2> is a 24V NiMH battery pack and is the one that has just been discharged. Further, because battery pack <2> is an empty battery, BVG is determined to small. From the region <2> in the Table shown in Fig. 3, the charge current is set to the level ***c.*** By setting the charge current reference value, that is used for determining whether the charge current is large or small, to a level higher than the level of charge current ***c,*** the charge current for battery pack <2> is determined to small. Accordingly, battery pack <2> is classified into region <2> in the Table of Fig. 4 and temperature ***j*** °C is used for determining the full charge condition. Specifically, battery pack <2> is determined to be fully charged when the computed BTG exceeds the level that is above ***j*** °C from the minimum BTG registered after the time instant ***K***.

Similarly, battery packs <3> through <16> are classified into regions <3> through <16> in the Table of Fig. 4 and the corresponding temperatures are used for determining the full charge condition. Examples of the full charge determination BTG values are: ***f***=6.3 °C, ***g***=5.6 °C, ***h***=5.0 °C, ***j***=3.8 °C, ***k***=3.1 °C, and ***l***=2.5 °C.

As described above, with the battery charger 100 according to the embodiment of the invention detects BV and BT and computes BVG and BTG and controls the charge current based on the detected and computed values. Further, the battery charger 100 determines that the battery pack has reached the fully charged condition when BTG computed at every sampling time exceeds the level that is above a full charge discrimination value from the minimum BTG, wherein the full charge discrimination value is determined based on BV, BT, BVG, and a charge current. Accordingly, the battery charger 100 according to the embodiment of the invention is capable of charging different types of battery packs at a low cost without need for employing a microcomputer provided with a large capacity ROM. Further, the battery charger 100 is capable of charging the battery packs with a level of charge current relevant to the type of the battery. As such, the charge control can be effectively performed to meet the characteristic of the battery.

While the invention has been described in detail with reference to a specific embodiment thereof, it would be apparent to those skilled in the art that various changes and modifications may be made therein without departing from the scope of the invention.

For example, although in the above-described embodiment, the charge current control and the full charge determination are performed using four parameters, it is possible to reduce the number of parameters to perform the same control and the same determination. For example, the charge current control may be performed using three parameters including BVG and BTG, and one of BV and BT.

In the above-described embodiment, the detected BV is evaluated as being high or low using a single reference voltage V1. However, BV may be evaluated as being high, middle or low using two reference voltages V1 and V2 where V1 is higher than V2. Specifically, when the detected BV is above a first reference voltage V1, BV is determined to high. When the detected BV is below the first reference voltage V1 but above the second reference voltage V2, BV is determined to middle. When the detected BV is below the second reference voltage V2, BV is determined to low. Adoption of such three distinct stages in evaluating the detected BV enables setting the charge current and determination of the full charge to be more precise and exact.

Further, the time instant K may be differentiated depending on BV and BT.

## Claims

1. A battery charger comprising:
a battery voltage detecting section that detects a battery voltage and produces battery voltage information about the detected battery voltage;
a battery voltage gradient computing section that computes a change in the battery voltage between two timings at which the battery voltages are detected, the battery voltage computing section producing battery voltage gradient information about the computed change in the battery voltage;
a battery temperature detecting section that detects a battery temperature and produces battery temperature information about the detected battery temperature;
a battery temperature gradient computing section that computes a change in the battery temperature between two timings at which the battery temperatures are detected, the battery temperature gradient computing section producing battery temperature gradient information about the computed change in the battery temperature; and
a control section that controls a charge current supplied to a battery based on the battery voltage gradient information, the battery temperature gradient information, and at least one of the battery voltage information and the battery temperature information.

2. The battery charger according to claim 1, further comprising a storage section that stores a minimum battery temperature gradient value indicative of a minimum change in the battery temperature between two timings at which the battery temperatures are detected, wherein the control section further determines a full charge discrimination value based on the battery voltage gradient information, charge current, and at least one of the battery voltage information and the battery temperature information, and determines that the battery has reached a full charge condition when the computed battery temperature change has exceeded a sum of the minimum battery temperature gradient value and the full charge discrimination value.

3. The battery charger according to any one of claims 1 and 2, wherein the battery voltage gradient information indicates whether the computed battery voltage change is high or low, wherein the computed battery voltage change is determined to high when comparison of the computed battery voltage change with a reference battery voltage change indicates that the computed battery voltage change is higher than the reference battery voltage change whereas the computed battery voltage change is determined to low when comparison of the computed battery voltage change with the reference battery temperature change indicates that the computed battery voltage change is lower than the reference battery voltage change.

4. The battery charger according to any one of claims 1 and 2, wherein the battery voltage gradient information indicates whether the computed battery voltage change is high, middle or low,
wherein the computed battery voltage change is determined to high when comparison of the computed battery voltage change with a first reference battery voltage change indicates that the computed battery voltage change is higher than the first reference battery voltage change;
wherein the computed battery voltage change is determined to middle when comparison of the computed battery voltage change with the first reference battery voltage change indicates that the computed battery voltage change is lower than the first reference battery voltage change and when comparison of the computed battery voltage change with a second reference battery voltage change indicates that the computed battery voltage change is higher than the second reference battery voltage change, the first referenced battery voltage change being larger than the second reference battery voltage change; and
wherein the computed battery voltage change is determined to low when comparison of the computed battery voltage change with the second reference battery voltage change indicates that the computed battery voltage change is lower than the second reference battery voltage change.

5. The battery charger according to any one of claims 1 and 2, wherein the battery temperature gradient information indicates whether the computed battery temperature change is high or low wherein the computed battery temperature change is determined to high when comparison of the computed battery temperature change with a reference battery temperature change indicates that the computed battery temperature change is higher than the reference battery temperature change whereas the computed battery temperature change is determined to low when comparison of the computed battery temperature change with the reference battery temperature change indicates that the computed battery temperature change is lower than the reference battery temperature change.

6. The battery charger according to any one of claims 1 and 2, wherein the battery temperature gradient information indicates whether the computed battery temperature change is high, middle or low,
wherein the computed battery temperature change is determined to high when comparison of the computed battery temperature change with a first reference battery temperature change indicates that the computed battery temperature change is higher than the first reference battery temperature change;
wherein the computed battery temperature change is determined to middle when comparison of the computed battery temperature change with the first reference battery temperature change indicates that the computed battery temperature change is lower than the first reference battery temperature change and when comparison of the computed battery temperature change with a second reference battery temperature change indicates that the computed battery temperature change is higher than the second reference battery temperature change, the first referenced battery temperature change being larger than the second reference battery temperature change; and
wherein the computed battery temperature change is determined to low when comparison of the computed battery temperature change with the second reference battery temperature change indicates that the computed battery temperature change is lower than the second reference battery temperature change.

7. The battery charger according to any one of claims 1 and 2, wherein the battery voltage information indicates whether the detected battery voltage is high or low wherein the detected battery voltage is determined to high when comparison of the detected battery voltage with a reference battery voltage indicates that the detected battery voltage is higher than the reference battery voltage whereas the detected battery voltage is determined to low when comparison of the detected battery voltage with the reference battery voltage indicates that the detected battery voltage is lower than the reference battery voltage.

8. The battery charger according to any one of claims 1 and 2, wherein the battery voltage information indicates whether the detected battery voltage is high, middle or low,
wherein the detected battery voltage is determined to high when comparison of the detected battery voltage with a first reference battery voltage indicates that the detected battery voltage is higher than the first reference battery voltage;
wherein the detected battery voltage is determined to middle when comparison of the detected battery voltage with the first reference battery voltage indicates that the detected battery voltage is lower than the first reference battery voltage and when comparison of the detected battery voltage with a second reference battery voltage indicates that the detected battery voltage is higher than the second reference battery voltage, the first reference battery voltage being higher than the second reference battery voltage; and
wherein the detected battery voltage is determined to low when comparison of the detected battery voltage with the second reference battery voltage indicates that the detected battery voltage is lower than the second reference battery voltage.

9. The battery charger according to claim any one of claims 1 and 2, wherein the battery temperature information indicates whether the detected battery temperature is high or low wherein the detected battery temperature is determined to high when comparison of the detected battery temperature with a reference battery temperature indicates that the detected battery temperature is higher than the reference battery temperature whereas the detected battery temperature is determined to low when comparison of the detected battery temperature with the reference battery temperature indicates that the detected battery temperature is lower than the reference battery temperature.

10. The battery charger according to any one of claims 1 and 2, wherein the battery temperature information indicates whether the detected battery temperature is high, middle or low,
wherein the detected battery temperature is determined to high when comparison of the detected battery temperature with a first reference battery temperature indicates that the detected battery temperature is higher than the first reference battery temperature;
wherein the detected battery temperature is determined to middle when comparison of the detected battery temperature with the first reference battery temperature indicates that the detected battery temperature is lower than the first reference battery temperature and when comparison of the detected battery voltage with a second reference battery temperature indicates that the detected battery temperature is higher than the second reference battery temperature, the first reference battery temperature being higher than the second reference battery temperature; and
wherein the detected battery temperature is determined to low when comparison of the detected battery temperature with the second reference battery temperature indicates that the detected battery temperature is lower than the second reference battery temperature.

11. The battery charger according to claim 1, wherein the battery voltage gradient computing section computes the change in the battery voltage after expiration of a predetermined period of time from a start of charge, and the battery temperature gradient computing section computes the change in the battery temperature after expiration of a predetermined period of time from the start of charge.
